# EUROPEAN PATENT APPLICATION

(11) **EP 3 760 416 A1**
(43) Date of publication of application: **06.01.2021**
(21) Application number: 19761611.3
(22) Date of filing: 27.02.2019
(51) Int. Cl.: B29C 70/10, B29C 70/40, C08J 5/04

(54) **FIBER-REINFORCED THERMOPLASTIC RESIN MOLDED ARTICLE AND PRODUCTION METHOD THEREFOR**

(30) Priority: 27.02.2018 JP 2018033705; 08.02.2019 JP 2019021861
(71) Applicant: National University Corporation Tokai National Higher Education and Research System, Nagoya-shi Aichi 464-8601 (JP); Kyowa Industrial Co., Ltd., Sanjo-shi, Niigata 955-0832 (JP); Teijin Limited, Osaka 530-0005 (JP)
(72) Inventor: ISHIKAWA Takashi, Nagoya-shi Aichi 464-8601 (JP); ICHIKI Makoto, Nagoya-shi Aichi 464-8601 (JP)
(74) Representative: Schröer, Gernot H.
(86) International application number: PCT/JP2019/007510
(87) International publication number: WO 2019/168010

(57) **Abstract**

A method of manufacturing a molded product of fiber-reinforced thermoplastic resin includes: mixing i) a first fiber-reinforced thermoplastic resin material manufactured by fusing and kneading a thermoplastic resin and fiber and extruding a resultant composite and ii) a second fiber-reinforced thermoplastic resin material manufactured by impregnating a fiber with a thermoplastic resin; heating the first and second fiber-reinforced thermoplastic resin materials thus mixed; and molding the first and second fiber-reinforced thermoplastic resin materials thus heated. An average value of a length of the fiber included in the second fiber-reinforced thermoplastic resin material is larger than an average value of a length of the fiber included in the first fiber-reinforced thermoplastic resin material.

## Description

### [TECHNICAL FIELD]

The present invention relates to a technology of molding a fiber-reinforced thermoplastic resin and, particularly, to a molded product of fiber-reinforced thermoplastic resin and a method of manufacturing the molded product.

### [BACKGROUND ART]

Fiber-reinforced plastic in which the strength is improved by carbon fiber, glass fiber, etc. has been developed. Fiber-reinforced plastic is lightweight, very strong, inexpensive, and highly durable, and is expected to be applied in various fields.

One such field is manufacturing of mobile objects such as automobiles. By manufacturing a structural part of a mobile object such as an automobile, it is possible to make the vehicle body lightweight while also maintaining the necessary strength. Accordingly, great contribution can be made to the solution of an environmental issue such as reduction in the amount of carbon dioxide emissions.

[Patent Literature 1] JP2010-173646

### [SUMMARY OF INVENTION]

### [TECHNICAL PROBLEM]

In order to apply fiber-reinforced plastic to the field such as mobile objects, manufacturing technology for manufacturing a molded product of fiber-reinforced plastic having favorable physical property that meets the specification of the product is essential.

The disclosure addresses the above-described issue, and a purpose thereof is to provide a technology for manufacturing a molded product of fiber-reinforced thermoplastic resin having favorable physical property.

### [SOLUTION TO PROBLEM]

A method of manufacturing a molded product of fiber-reinforced thermoplastic resin according to one mode of the present disclosure includes: mixing i) a first fiber-reinforced thermoplastic resin material manufactured by fusing and kneading a thermoplastic resin and fiber and extruding a resultant composite and ii) a second fiber-reinforced thermoplastic resin material manufactured by impregnating a fiber with a thermoplastic resin; heating the first and second fiber-reinforced thermoplastic resin materials thus mixed; and molding the first and second fiber-reinforced thermoplastic resin materials thus heated. An average value of a length of the fiber included in the second fiber-reinforced thermoplastic resin material is larger than an average value of a length of the fiber included in the first fiber-reinforced thermoplastic resin material.

A molded product of fiber-reinforced thermoplastic resin according to another mode of the present disclosure is a molded product of fiber-reinforced thermoplastic resin including a fiber and a thermoplastic resin, wherein an average value of a length of the fiber included in the fiber-reinforced thermoplastic resin forming a surface layer of the molded product is larger than an average value of a length of the fiber included in the fiber-reinforced thermoplastic resin forming an interior of the molded product.

### [ADVANTAGEOUS EFFECTS OF INVENTION]

According to the present disclosure, a technology for manufacturing a molded product of fiber-reinforced thermoplastic resin having favorable physical property can be provided.

### [BRIEF DESCRIPTION OF DRAWINGS]

Fig. 1 shows a technology related to the method of manufacturing a molded product of carbon fiber-reinforced thermoplastic resin according to the embodiment;
Fig. 2 schematically shows the method of manufacturing a molded product of carbon fiber-reinforced thermoplastic resin according to the embodiment; and
Fig. 3 schematically shows another example of the method of manufacturing a molded product of carbon fiber-reinforced thermoplastic resin according to the embodiment.

### [DESCRIPTION OF EMBODIMENTS]

The method of manufacturing a molded product of fiber-reinforced thermoplastic resin includes mixing i) a first fiber-reinforced thermoplastic resin material manufactured by fusing and kneading a thermoplastic resin and a fiber and extruding a resultant composite and ii) a second fiber-reinforced thermoplastic resin material manufactured by impregnating a fiber with a thermoplastic resin; heating the first and second fiber-reinforced thermoplastic resin materials thus mixed; and molding the first and second fiber-reinforced thermoplastic resin materials thus heated. The average value of the length of the fiber included in the second fiber-reinforced thermoplastic resin material is larger than the average value of the length of the fiber included in the first fiber-reinforced thermoplastic resin material.

By mixing a suitable amount of the second fiber-reinforced thermoplastic resin material capable of imparting physical property such as elastic modulus and strength with the first fiber-reinforced thermoplastic resin material having high fluidity, it is possible to manufacture a molded product having favorable physical property that meets the specification required of the product, while also maintaining high workability that makes it possible to manufacture a molded product at a high speed by press molding. According to such a manufacturing method, it is possible to manufacture a large number of molded products having desired physical property in a short period of time. Therefore, the industrial significance of the technology according to the present disclosure is extremely high.

The fiber used as a reinforcing material may be carbon fiber, glass fiber, boron fiber, aramid fiber, polyethylene fiber, metal fiber, plant fiber, etc. An example in which carbon fiber is used as a reinforcing material will be described in the following embodiment.

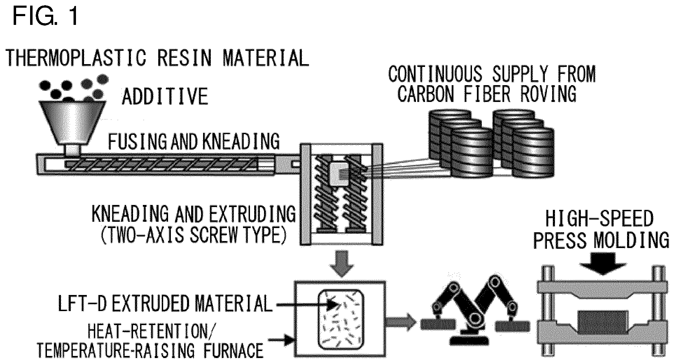

Fig. 1 shows a technology related to the method of manufacturing a molded product of carbon fiber-reinforced thermoplastic resin according to the embodiment. Fig. 1 schematically shows a method of manufacturing a molded product of carbon fiber-reinforced thermoplastic resin called a Long Fiber Thermoplastics Direct (LFT-D) process. In the LFT-D process, a thermoplastic resin pellet manufactured by fusing and kneading a thermoplastic resin material and an additive, and a carbon fiber supplied from carbon fiber roving are kneaded and extruded by a two-axis screw extruder. The LFT-D extruded material thus extruded is maintained at an appropriate temperature in a heat-retention/temperature-raising furnace until it is supplied to a high-speed press molding apparatus. The LFT-D extruded material in the heat-retention/temperature-raising furnace is supplied to the high-speed press molding apparatus by a robot arm and is molded into a desired shape. Thus, according to the LFT-D process, it is possible to build an automated manufacturing system for the entire process that begins with continuously supplying a thermoplastic resin pellet and a carbon fiber and ends with molding of an ultimate product. Since the LFT-D extruded material formed from a thermoplastic resin is highly fluid and moldable, it is possible to manufacture an ultimate product of a desired shape in a short period of time by using a high-speed press molding apparatus.

We have made experiments to mold a chassis member of an automobile by the manufacturing method shown in Fig. 1 and succeeded in completing the molding process in about one minute, which is dramatically shorter than the time in the related art. We have also succeeded in manufacturing a chassis for an automobile made only of a carbon fiber-reinforced thermoplastic resin for the first time in the world. This has been achieved by exploiting the advantage of the fusion-bondable nature of thermoplastic resin and joining chassis members using the ultrasonic fusion bonding method.

We have studied technologies for further improving the physical property of a molded product to further promote applications of carbon fiber-reinforced thermoplastic resin to structural members of automobiles, etc. We have arrived at the method of manufacturing a molded product of carbon fiber-reinforced thermoplastic resin according to the embodiment.

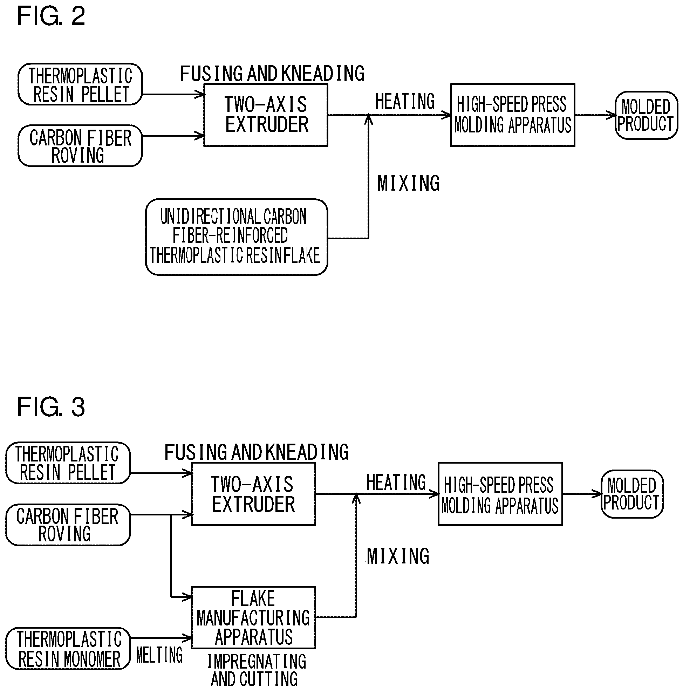

Fig. 2 schematically shows the method of manufacturing a molded product of carbon fiber-reinforced thermoplastic resin according to the embodiment. As in the LFT-D process shown in Fig. 1, a carbon fiber supplied from carbon fiber roving and a thermoplastic resin pellet are supplied as source materials to a two-axis screw extruder. By fusing, kneading, extruding these materials, the first fiber-reinforced thermoplastic resin material (hereinafter, simply called "the first material") is manufactured. Subsequently, the second fiber-reinforced thermoplastic resin material (hereinafter, simply called "the second material") manufactured by a manufacturing method other than kneading is mixed with the first material. As described later, the second material is exemplified by flakes of unidirectional carbon fiber-reinforced thermoplastic resin. The first material and the second material thus mixed are heated to a temperature at which the materials are sufficiently fluid. By introducing the materials into a high-speed press molding apparatus for press molding, a molded product of a desired shape is manufactured.

The first material is manufactured by fusion, kneading, and extrusion and so is highly fluid and makes it possible to manufacture a molded product easily and speedily by press molding. On the other hand, since the carbon fiber is cut when the material is kneaded in the two-axis screw extruder, there is a certain limit to improvement of physical property such as elastic modulus and strength of a molded product by extending the length of the carbon fiber. Increasing the fiber volume (Vf) of carbon fiber too high makes it difficult for the two-axis screw extruder to knead and extrude the material. Therefore, there is also a limit to improvement of physical property by increasing the volume of carbon fiber. This is addressed by this embodiment by mixing with the second material conditioned with the first material such that the average value of the length of the carbon fiber included in the second material is greater than the average value of the length of the carbon fiber included in the first material, thereby improving physical property such as elastic modulus and strength of a molded product. The average value of the length of the carbon fiber included in the first material or the second material can be calculated as an average value of the length of each carbon fiber piece located per a unit area (1 mm2) at the center and in arbitrary portions at the four corners of the material measured by using an image measurement device.

In this way, fluidity and workability for enabling high-speed press molding is mainly realized by the first material, and further improvement in physical property such as elastic modulus and strength of a molded product is mainly realized by the second material. Therefore, the viscosity of the first material when fused is higher than the viscosity of the second material when fused in the method of manufacturing a molded product of fiber-reinforced thermoplastic resin according to the embodiment. The viscosity of the material when fused can be measured by measuring the Melt Mass-Flow Rate (MFR). Further, the fiber volume of the second material is higher than the fiber volume of the first material in the method of manufacturing a molded product of fiber-reinforced thermoplastic resin according to the embodiment. The fiber volume can be measured by JISK7075-1991 "Testing methods for carbon fiber content and void content of carbon fiber reinforced plastics".

The mixing ratio of the first material and the second material may be adjusted in accordance with the complexity of the shape of the worked product, the specification required of the product, etc. Generally, the higher the mixing ratio of the second material, the higher the physical property such as elastic modulus and strength but the lower the workability of the mixture. Therefore, the mixing ratio of the first material and the second material may be adjusted so that suitable physical property is obtained in accordance with the complexity of the shape of the worked product and the specification required of the product, allowing for the viscosity, fluidity, workability of the mixture. In the case of a molded product required to have high strength and high rigidity and having a relatively simple shape, for example, the mixing ratio of the second material may be increased. In the case of a molded product having a relatively complicated shape, high fluidity is required in press molding. Therefore, the proportion of the first material may be increased.

The same reasoning holds true of the length of the carbon fiber included in the second material and the fiber volume of the carbon in the second material. Generally, the larger the length of the carbon fiber included in the second material and the larger the carbon fiber volume of the second material, the higher the physical property such as elastic modulus and strength but the lower the workability of the mixture. Therefore, the length of the carbon fiber included in the second material or the carbon fiber volume of the second material may be adjusted so that suitable physical property is obtained in accordance with the complexity of the shape of the worked product and the specification required of the product, allowing for the viscosity, fluidity, workability of the mixture.

The second material may be manufactured by an arbitrary manufacturing method so long as the method results in the average value of the length of the carbon fiber included in the second material being greater than the average value of the length of the carbon fiber included in the first material. To increase the carbon fiber volume of the second material, it is suitable to use a carbon fiber-reinforced thermoplastic resin manufactured by impregnating carbon fiber with a thermoplastic resin as the second material. Further, in order to make the length of the carbon fiber included in the second material adjustable to meet the specification required of the product, it is particularly suitable to use, as the second material, a carbon fiber-reinforced thermoplastic resin manufactured by impregnating a bundle or sheet of carbon fiber drawn in alignment with one direction with a thermoplastic resin or flakes produced by cutting a woven carbon fiber prepreg sheet impregnated with a thermoplastic resin to a predetermined length.

A large number of flakes having an uniform length may be used as the second material. A plurality of types of flakes having different lengths may be used. Still alternatively, a large number of flakes having lengths distributed over a predetermined range may be used. It is also ensured in this case that the average value of the length of the carbon fiber included in the second material is greater than the average value of the length of the carbon fiber included in the first material. The average value of the length of the carbon fiber included in the second fiber may be, for example, 5-10 mm.

A larger number of flakes having an uniform carbon fiber volume, a plurality of types of flakes having different carbon fiber volumes, or a larger number of flakes having fiber volumes distributed over a predetermined range may be used as the second material.

The second material may have a shape of a needle, flake, paper strip, line, or rod. The second material may have an alternative arbitrary two-dimensional or three-dimensional shape.

The thermoplastic resin that serves as the matrix of the first material and the second material may be a polyamide such as polyamide 6, polyamide 11, polyamide 12, polyamide 66, polyamide 610, polyamide 6T, polyamide 61, polyamide 9T, polyamide M5T. The thermoplastic resin may be polypropylene, polyvinyl chloride, polyvinylidene chloride, polystyrene, polyvinyl acetate, polyurethane, polytetrafluoroethylene, acrylonitrile butadiene styrene, acrylic resin, polyacetal, polycarbonate, polyphenylene ether, modified polyphenylene ether, polyester, polyethylene terephthalate, polybutylene terephthalate, cyclic polyolefin, polyphenylene sulfide, polysulfone, polyether sulfone, polyether ether ketone, polyimide, polyamide-imide, or the like.

The thermoplastic resin that serves as the matrix of the first material and the thermoplastic resin that serves as the matrix of the second material may be the same type of thermoplastic resin. This makes it possible to form the entirety of the molded product by carbon fiber-reinforced thermoplastic resins in which the same type of thermoplastic resin is used as the matrix. Accordingly, the molded product is prevented from being fractured or warped at the boundary plane between the first material and the second material, and the physical property such as elastic modulus and rigidity of the molded product can be improved. Different types of thermoplastic resins may be used. For example, the first material and the second material formed by using, as the matrix, a combination of thermoplastic resins that are similar in physical property such as melting point and coefficient of thermal expansion, a combination of compatible thermoplastic resins, or a combination of thermoplastic resins characterized by favorable adhesiveness at any boundary plane that may be created may be mixed.

Each of the first material and the second material may be a polymer blend that includes a plurality of types of thermoplastic resins as matrices. In this case, too, it is preferred that the materials include the same types of thermoplastic resins as matrices. Further, it is preferred that the composition ratios of the polymer blends are substantially equal.

For example, the first-third methods below are conceivable as the method of mixing the first material and the second material. The first method sprinkles the surface of the first material with the second material. The second material may be sprayed from above the first material. In the case the back surface and the side surface of the first material are sprinkled with the second material as well as the top surface thereof, the first material may be rotated so that another surface may be the top surface sprinkled with the second material from above. Alternatively, the second material may be blown onto the back surface or the side surface of the first material. Depending on the specification required of the product, the surface of the first material may be sprinkled with a large number of pieces of second material such the longitudinal directions thereof are aligned with each other, or the surface of the first material may be sprinkled with the second material in random directions. According to the first method, a layer of the second material is formed on the first material. Accordingly, physical property such as strength and rigidity of the surface layer of the molded product can be improved. Further, the second material can be mixed with the first material in a simple method so that the cost for facilities can be reduced.

The second method shapes the second material into a sheet and covers the first material with the sheet of the second material. The sheet of the second material may be shaped by, for example, spraying the second material on a plane and heating and pressuring the sheet. The sheet of the second material may cover the entirety of the surface of the first material, or cover the top surface and the back surface, or cover the surface only in part. In this case too, the sheet may be shaped such that the longitudinal directions of a large number of pieces of the second material are aligned with each other, or the sheet may be shaped such that the pieces of the second material are randomly oriented, in order to meet the specification required of the product. According to the second method, an even layer of the second material can be formed on the surface of the first material so that uneven distribution of the second material is prevented, and a molded product having favorable physical property can be manufactured.

The third method is a method of injecting the second material into the first material. A large number of pieces of the second material may be collected to form a continuous flow, which may be injected before or after the first material is discharged. According to the third method, the elastic modulus and strength inside the molded product can also be improved.

In the case the first material and the second material are mixed by the first or second method, the surface layer of the molded product is mainly formed by the second material, and the interior of the molded product is mainly formed by the first material. Therefore, the average value of the length of the fiber included in the fiber-reinforced thermoplastic resin forming the surface layer of the molded product will be greater than the average value of the length of the fiber included in the fiber-reinforced thermoplastic resin forming the interior of the molded product. This can improve physical property such as elastic modulus and strength of the surface layer of the molded product.

Fig. 3 schematically shows another example of the method of manufacturing a molded product of carbon fiber-reinforced thermoplastic resin according to the embodiment. In the example shown in Fig. 2, it is assumed that the second material is purchased as a product and is mixed with the first material. In the example shown in Fig. 3, the first material and the second material are manufactured in parallel and are mixed.

In the flake manufacturing apparatus, the carbon fiber supplied from carbon fiber roving is impregnated with a thermoplastic resin and is cut to a predetermined length, thereby manufacturing the second material. Unlike the case of impregnating the carbon fiber with a polymer, impregnating the carbon fiber with a thermoplastic resin monomer, and then heating and polymerizing the fiber does not require generating a high temperature and a high pressure for the purpose of impregnation. Therefore, the approach is particularly suitable.

In the manufacturing of a carbon fiber-reinforced thermoplastic resin of field polymerization type like this, it is particularly suitable to use a polyamide made from ε-caprolactam as a monomer. The melting point of ε-caprolactam is as low as 69°C, and the viscosity of the liquid in which ε-caprolactam is melted is sufficiently low. It is easy to impregnate carbon fiber with the resin. The temperature required for a polymerizing reaction is relatively low, and the time required for a polymerization reaction is relatively short. Therefore, impregnation, polymerization, and cutting can be performed continuously and the second material can be manufactured efficiently in the flake manufacturing apparatus.

In the example of Fig. 3, carbon fiber supplied from carbon fiber roving can be used both as the source material of the first material and as the source material of the second material. It is therefore possible to realize a manufacturing method that wastes little material. Further, the first material and the second material are manufactured concurrently and in parallel so that it is possible to mix the first material and the second material upon being manufactured, maintaining a high temperature, and to introduce the materials into the high-speed press molding apparatus for molding. It is therefore possible to realize a manufacturing line that conserves energy and saves space. The industrial significance of the technology according to the present disclosure is extremely high also in these respects.

Given above is a description of the present disclosure based on an exemplary embodiment. The embodiment is intended to be illustrative only and it will be obvious to those skilled in the art that various modifications to constituting elements and processes could be developed and that such modifications are also within the scope of the present invention.

One embodiment of the present invention is summarized below. A method of manufacturing a molded product of fiber-reinforced thermoplastic resin according to a mode of the present disclosure includes: mixing i) a first fiber-reinforced thermoplastic resin material manufactured by fusing and kneading a thermoplastic resin and fiber and extruding a resultant composite and ii) a second fiber-reinforced thermoplastic resin material manufactured by impregnating a fiber with a thermoplastic resin; heating the first and second fiber-reinforced thermoplastic resin materials thus mixed; and molding the first and second fiber-reinforced thermoplastic resin materials thus heated. An average value of a length of the fiber included in the second fiber-reinforced thermoplastic resin material is larger than an average value of a length of the fiber included in the first fiber-reinforced thermoplastic resin material.

According to this embodiment, a desired physical property can be imparted to the second fiber-reinforced thermoplastic resin material, while also maintaining high workability provided by the highly fluid first fiber-reinforced thermoplastic resin material. It is therefore possible to manufacture a molded product having favorable physical property that meets the specification required of the product.

In this method of manufacturing a molded product of fiber-reinforced thermoplastic resin, the second fiber-reinforced thermoplastic resin material may be a flake produced by cutting a unidirectional fiber-reinforced thermoplastic resin manufactured by impregnating a plurality of fiber pieces drawn in one direction with a thermoplastic resin to a predetermined length. According to this embodiment, it is easy to adjust the length of the carbon fiber included in the second fiber-reinforced thermoplastic resin material in order to obtain a molded product having a physical property suitable for the usage of the product.

In this method of manufacturing a molded product of fiber-reinforced thermoplastic resin, the thermoplastic resin that serves as a matrix of the first fiber-reinforced thermoplastic resin material and the thermoplastic resin that serves as a matrix of the second fiber-reinforced thermoplastic resin material may be the same type of thermoplastic resin. According to this embodiment, it is possible to form the entirety of the molded product by carbon fiber-reinforced thermoplastic resins in which the same type of thermoplastic resin is used as a matrix. Accordingly, the molded product is prevented from being fractured or warped at the boundary plane between the first material and the second material, and the physical property such as elastic modulus and rigidity of the molded product can be improved.

In this method of manufacturing a molded product of fiber-reinforced thermoplastic resin according to claim, the thermoplastic resin that serves as a matrix of the first fiber-reinforced thermoplastic resin material and the thermoplastic resin that serves as a matrix of the second fiber-reinforced thermoplastic resin material may be polyamide 6. According to this embodiment, it is possible to realize a manufacturing line that manufactures the first fiber-reinforced resin material and the second fiber-reinforced resin material concurrently and in parallel and mixes the materials on site for molding.

In this method of manufacturing a molded product of fiber-reinforced thermoplastic resin, a viscosity of the first fiber-reinforced thermoplastic resin material when fused may be higher than a viscosity of the second fiber-reinforced thermoplastic resin material when fused. According to this embodiment, high workability can be provided by the first fiber-reinforced thermoplastic resin material.

In this method of manufacturing a molded product of fiber-reinforced thermoplastic resin, a fiber volume of the second fiber-reinforced thermoplastic resin material may be higher than a fiber volume of the first fiber-reinforced thermoplastic resin material. According to this embodiment, favorable physical property can be provided by the second fiber-reinforced thermoplastic resin material.

In this method of manufacturing a molded product of fiber-reinforced thermoplastic resin, the mixing may include spraying the second fiber-reinforced thermoplastic resin material onto a surface of the first fiber-reinforced thermoplastic resin material. According to this embodiment, a layer of the second fiber-reinforced thermoplastic resin material is formed on the surface of the first fiber-reinforced thermoplastic resin material. Accordingly, the physical property such as the strength and rigidity of the surface layer of the molded product can be improved. Further, the second fiber-reinforced resin material can be mixed with the first fiber-reinforced resin material in a simple method so that the cost for facilities can be reduced.

In this method of manufacturing a molded product of fiber-reinforced thermoplastic resin, the mixing may include: shaping the second fiber-reinforced thermoplastic resin material into a sheet; and covering a surface of the first fiber-reinforced thermoplastic resin material with a sheet of the second fiber-reinforced thermoplastic resin material. According to this embodiment, an even layer of the second fiber-reinforced resin material can be formed on the surface of the first fiber-reinforced resin material so that uneven distribution of the second fiber-reinforced resin material is prevented, and a molded product having favorable physical property can be manufactured.

In this method of manufacturing a molded product of fiber-reinforced thermoplastic resin, the mixing may include injecting the second fiber-reinforced thermoplastic resin material into the first fiber-reinforced thermoplastic resin material. According to the embodiment, the elastic modulus and strength inside the molded product can also be improved.

A molded product of fiber-reinforced thermoplastic resin according to an embodiment of the present disclosure is a molded product of fiber-reinforced thermoplastic resin including a fiber and a thermoplastic resin, wherein an average value of a length of the fiber included in the fiber-reinforced thermoplastic resin forming a surface layer of the molded product is larger than an average value of a length of the fiber included in the fiber-reinforced thermoplastic resin forming an interior of the molded product.

According to this embodiment, the surface layer formed by the fiber-reinforced thermoplastic resin including a longer fiber provides physical property such as high elastic modulus and strength in a molded product manufactured from a highly fluid fiber-reinforced thermoplastic resin material.

In this molded product of fiber-reinforced thermoplastic resin, the thermoplastic resin may be polyamide 6. According to this embodiment, it is possible to manufacture a molded product in a manufacturing line that manufactures the first fiber-reinforced resin material that forms the interior of the molded product and the second fiber-reinforced resin material that forms the surface layer of the molded product concurrently and in parallel and mixes the materials on site for molding.

### [INDUSTRIAL APPLICABILITY]

The present disclosure is applicable to a molded product of fiber-reinforced thermoplastic resin and a method of manufacturing the molded product.

## Claims

1. A method of manufacturing a molded product of fiber-reinforced thermoplastic resin, comprising:
mixing i) a first fiber-reinforced thermoplastic resin material manufactured by fusing and kneading a thermoplastic resin and fiber and extruding a resultant composite and ii) a second fiber-reinforced thermoplastic resin material manufactured by impregnating a fiber with a thermoplastic resin;
heating the first and second fiber-reinforced thermoplastic resin materials thus mixed; and
molding the first and second fiber-reinforced thermoplastic resin materials thus heated, wherein
an average value of a length of the fiber included in the second fiber-reinforced thermoplastic resin material is larger than an average value of a length of the fiber included in the first fiber-reinforced thermoplastic resin material.

2. The method of manufacturing a molded product of fiber-reinforced thermoplastic resin according to claim 1, wherein
the second fiber-reinforced thermoplastic resin material is a flake produced by cutting a unidirectional fiber-reinforced thermoplastic resin manufactured by impregnating a plurality of fiber pieces drawn in one direction with a thermoplastic resin to a predetermined length.

3. The method of manufacturing a molded product of fiber-reinforced thermoplastic resin according to claim 1 or 2, wherein
the thermoplastic resin that serves as a matrix of the first fiber-reinforced thermoplastic resin material and the thermoplastic resin that serves as a matrix of the second fiber-reinforced thermoplastic resin material are the same type of thermoplastic resin.

4. The method of manufacturing a molded product of fiber-reinforced thermoplastic resin according to claim 3, wherein
the thermoplastic resin that serves as a matrix of the first fiber-reinforced thermoplastic resin material and the thermoplastic resin that serves as a matrix of the second fiber-reinforced thermoplastic resin material are polyamide 6.

5. The method of manufacturing a molded product of fiber-reinforced thermoplastic resin according to any one of claims 1 through 4, wherein
a viscosity of the first fiber-reinforced thermoplastic resin material when fused is higher than a viscosity of the second fiber-reinforced thermoplastic resin material when fused.

6. The method of manufacturing a molded product of fiber-reinforced thermoplastic resin according to any one of claims 1 through 5, wherein
a fiber volume of the second fiber-reinforced thermoplastic resin material is higher than a fiber volume of the first fiber-reinforced thermoplastic resin material.

7. The method of manufacturing a molded product of fiber-reinforced thermoplastic resin according to any one of claims 1 through 6, wherein
the mixing includes spraying the second fiber-reinforced thermoplastic resin material onto a surface of the first fiber-reinforced thermoplastic resin material.

8. The method of manufacturing a molded product of fiber-reinforced thermoplastic resin according to any one of claims 1 through 7, wherein
the mixing includes:
shaping the second fiber-reinforced thermoplastic resin material into a sheet; and
covering a surface of the first fiber-reinforced thermoplastic resin material with a sheet of the second fiber-reinforced thermoplastic resin material.

9. The method of manufacturing a molded product of fiber-reinforced thermoplastic resin according to any one of claims 1 through 8, wherein
the mixing includes injecting the second fiber-reinforced thermoplastic resin material into the first fiber-reinforced thermoplastic resin material.

10. A molded product of fiber-reinforced thermoplastic resin including a fiber and a thermoplastic resin, wherein
an average value of a length of the fiber included in the fiber-reinforced thermoplastic resin forming a surface layer of the molded product is larger than an average value of a length of the fiber included in the fiber-reinforced thermoplastic resin forming an interior of the molded product.

11. The molded product of fiber-reinforced thermoplastic resin according to claim 10, wherein
the thermoplastic resin is polyamide 6.
